# EUROPÄISCHE PATENTANMELDUNG

(11) **EP 3 564 283 A1**
(43) Veröffentlichungstag der Anmeldung: **06.11.2019**
(21) Anmeldenummer: 18170000.6
(22) Anmeldetag: 30.04.2018
(51) Int. Cl.: C08G 18/48, C08G 18/76

(54) **VERFAHREN ZUR HERSTELLUNG VON GESCHLOSSENZELLIGEM POLYURETHANSCHAUM**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die vorliegende Erfindung betrifft ein Verfahren zur Herstellung eines harten, feinzelligen Polyurethanschaums (PUR-Schaum), der neben Urethangruppen auch Isocyanuratgruppen enthalten kann und als Isolationsmaterial eingesetzt wird.

## Beschreibung

Die vorliegende Erfindung betrifft ein Verfahren zur Herstellung eines harten, feinzelligen Polyurethanschaums (PUR-Schaum). Die Schaumstoffe können neben Urethangruppen auch Isocyanuratgruppen enthalten.

Bei der Herstellung von Polyurethanschäumen auf Hochdruckverarbeitungsanlagen können als Treibmittel Stoffe (bevorzugt CO₂) oder Mischungen verschiedener Stoffe in überkritischem Zustand eingesetzt werden. In Kombination mit dem sogenannten POSME-Konzept (POSME = Principle of Supercritical Microemulsion Expansion; beschrieben in WO 2004/058386) lassen sich so aus Treibmittel-Mikroemulsionströpfchen im ein- bis zweistelligen Nanometerbereich nach erfolgter Expansion PUR-Schäume mit um Größenordnungen kleineren Zellgrößen im Vergleich zu Standard PUR-Schäumen herstellen. Dies ist näher in WO 2011/054873 beschrieben. Ausschlaggebend hierfür ist, dass diese als Treibmittel verwendeten Stoffe im gesamten Prozess bis zum gewünschten Aufschäumzeitpunkt unter erhöhtem Druck [p > p_{c} (überkritischer Druck) (bei CO₂ > 73 bar)] und unter erhöhter Temperatur [t > t_{c} (überkritische Temperatur) (bei CO₂ > 31 °C)] eingesetzt werden. Üblicherweise werden die Treibmittel in den Polyolstrom bei einem Druck von p > 150 bar dosiert.

Nach dem Vermischen der Polyol-Treibmittel-Mischung (inklusive Katalysator und Additiven) in einem Hochdruckmischkopf mit Isocyanat beginnt die Urethan-Reaktion (Viskositätsaufbau). Während der Reaktion sollte der Druck nicht unter den kritischen Druck von p_{c} sinken, um ein vorzeitiges Aufschäumen zu vermeiden. Dies wird durch die Injektion der Reaktionsmischung in einen Reaktionsraum, welcher die geforderten Druck- und Temperaturverhältnisse aufweist, gewährleistet. In WO 2011/054873 wird ein entsprechender Reaktionsraum beschrieben.

Der Druck im Reaktionsraum kann durch Gasgegendruck und/oder durch eine Kolbensteuerung gezielt gesteuert werden. Diese gezielte Steuerung wird in WO 2018/019907 beschrieben.

Die im Stand der Technik beschriebenen Polyurethanrezepturen führen aufgrund ihres hohen Anteils an Mikroemulsionstensid, welches für die im POSME-Konzept notwendige Mikroemulsion benötigt wird, zu einer Verringerung der Druckfestigkeit und einer Erhöhung der Rohstoffkosten.

Aufgabe der vorliegenden Erfindung war es daher, eine Polyurethan(PUR)reaktivmischung zur Verfügung zu stellen, mit der unter den aus dem Stand der Technik bekannten Reaktionsbedingungen (Druck und Temperatur) mit dem vorgenannten POSME-Konzept unter Verwendung einer reduzierten Menge an mikroemulsionsbildenden Tensiden einfein- und geschlossenzelliger Polyurethanschaum erhalten werden kann.

Überraschend wurde gefunden, dass mit überkritischem CO₂ als Treibmittel mit der bekannten, oben erwähnten Technologie (POSME-Konzept), wie sie in WO 2004/058386 beschrieben wird, auch gänzlich ohne Einsatz von mikroemulsionsbildenden Tensiden fein- und geschlossenzellige Polyurethanschäume erhalten werden. Entgegen aller Erwartungen ist ein mikroemulsionsbildendes Tensid in der PUR-Reaktivmischung überraschenderweise nicht notwendig, um die Zellgröße im Vergleich zu Standard PUR-Schäumen deutlich zu reduzieren.

Gegenstand der Erfindung ist ein Verfahren zur Herstellung von fein- und geschlossenzelligem Polyurethan/Polyisocyanurathartschaum (PUR/PIR-Hartschaum) mit einer Offenzelligkeit von < 10% gemäß DIN EN ISO 4590-2003 und einer mittleren Zellgröße von < 30 µm (ermittelt durch Zellgrößenauswertung am Lichtmikroskop), umfassend die Schritte:
i) Vermischen von einer mit Isocyanaten reaktiven Polyolformulierung mit überkritischem CO₂,
ii) Vermischen der mit CO₂ vermischten Polyolformulierung mit einem organischen Polyisocyanat in einem Hochdruckmischkopf,
iii) Einbringen der in ii) genannten Mischung in eine geschlossene Form, wobei die geschlossene Form so eingerichtet ist, dass deren inneres Volumen und/oder der in ihrem Inneren herrschende Druck nach dem Einbringen der Mischung durch externe Beeinflussung verändert werden,
iv) Verweilen der in ii) genannten Mischung in der geschlossenen Form für eine vorbestimmte Zeitdauer von ≥ 0 Sekunden,
v) Vergrößern des inneren Volumens der geschlossenen Form und/oder Verringern des im Inneren der geschlossenen Form herrschenden Drucks durch externe Beeinflussung, und
vi) Entformen des PUR/PIR-Hartschaums,
wobei als Polyurethanreaktivmischung eine Mischung bestehend aus
a) mindestens einem organischen Polyisocyanat,
b) einer Polyolkomponente bestehend aus
   b1) einem oder mehreren Polyolen wobei mindestens eine Polyolkomponente eine Funktionalität f von > 2,5 aufweist, welche ausgewählt ist aus der Gruppe bestehend aus Polyetherpolyolen, Polyesterpolyolen, Polycarbonatpolyolen, Polyether-Polycarbonatpolyolen und Polyetheresterpolyolen,
   b2) einer Katalysatorkomponente,
   b3) gegebenenfalls Hilfs- und Zusatzmitteln, beispielsweise Stabilisatoren und Flammschutzmittel,
   b4) gegebenenfalls Treibmitteln ausgenommen CO₂, ausgewählt aus der Gruppe umfassend lineare, verzweigte oder cyclische C1- bis C6-Alkane, lineare, verzweigte oder cyclische C1- bis C6-Fluoralkane, N₂, O₂ und/oder Argon und
c) überkritischem CO₂ als Treibmittel,
die kein mikroemulsionsstabilisierendes Tensid enthält, eingesetzt wird.

Die erfindungsgemäß eingesetzte Polyolkomponente (b) weist eine gute CO₂-Löslichkeit auf, die bevorzugt bei ≥ 15 Gew.-% CO₂/Polyol (gemessen bei 80 bar und 35 °C) liegt.

Ein weiterer Gegenstand der Erfindung ist ein fein- und geschlossenzelliger Polyurethan-/Polyisocyanurathartschaum mit einer Offenzelligkeit von < 10% gemäß DIN EN ISO 4590-2003 und einer mittleren Zellgröße von < 30 µm (ermittelt durch Zellgrößenauswertung am Lichtmikroskop), der erhältlich ist aus einer Polyurethanreaktionsmischung bestehend aus
a) mindestens einem organischen Polyisocyanat,
b) einer Polyolkomponente bestehend aus
   b1) einem oder mehreren Polyolen, wobei mindestens eine Polyolkomponente eine Funktionalität f von > 2,5 aufweist, welche ausgewählt ist aus der Gruppe bestehend aus Polyetherpolyolen, Polyesterpolyolen, Polycarbonatpolyolen, Polyether-Polycarbonatpolyolen und Polyetheresterpolyolen,
   b2) einer Katalysatorkomponente,
   b3) gegebenenfalls Hilfs- und Zusatzmitteln, beispielsweise Stabilisatoren und Flammschutzmittel,
   b4) gegebenenfalls Treibmitteln ausgenommen CO₂, ausgewählt aus der Gruppe umfassend lineare, verzweigte oder cyclische C1- bis C6-Alkane, lineare, verzweigte oder cyclische C1- bis C6-Fluoralkane, N₂, O₂ und/oder Argon und
c) überkritischem CO₂ als Treibmittel,
die kein mikroemulsionsstabilisierendes Tensid enthält.

Die erfindungsgemäß hergestellten Polyurethanschäume werden als Isolationsmaterial verwendet.

Die Isocyanatkomponente (a) umfasst eine oder beide der im Folgenden beschriebenen Komponenten (a1) und/oder (a2).
(a1) umfasst eine Mischung aus (a1.a) 20 - 80 Gew.-% eines monomeren Diisocyanates und (a1.b) 80 - 20 Gew. % homologer Oligomere der monomeren Diisocyanate (a1.a), und gegebenenfalls weiterer Isocyanate (a1.c),
(a2) umfasst Präpolymere hergestellt durch Umsetzung einer Isocyanatmischung (a1) mit einem Polyol, wie es unter (b1) beschrieben ist.

Die Komponente (a) weist eine mittlere NCO-Funktionalität von > 2 auf.

Als Isocyanatkomponente (a1) werden bevorzugt Mischungen aus (a1.a) Isomeren des Diphenylmethandiisocyanats ("monomeres MDI", abgekürzt "mMDI") und (a1.b) dessen Oligomeren ("oligomeres MDI") eingesetzt. Mischungen aus monomerem MDI und oligomerem MDI werden allgemein als "polymeres MDI" (pMDI) bezeichnet. Die Oligomere des MDI sind höherkernige Polyphenyl-polymethylen-polyisocyanate, d.h. Gemische der höherkernigen Homologen des Diphenyl-methylen-diisocyanates, welche eine NCO - Funktionalität f > 2 aufweisen und folgende Summenformel aufweisen: C₁₅H₁₀N₂O₂[C₈H₅NO]ₙ, wobei n = ganze Zahl > 0, bevorzugt n = 1, 2, 3 und 4, ist. Höherkernige Homologe (C₁₅H₁₀N₂O₂[C₈H₅NO]ₘ, m = ganze Zahl ≥ 4) können ebenfalls im Gemisch aus organischen Polyisocyanaten a) enthalten sein.

Neben den beiden Hauptkomponenten (a1.a) und (a1.b) kann (a1) bis zu 20 Gew.-%, bevorzugt maximal 10 Gew.-% an weiteren, für die Herstellung von Polyurethanen bekannten aliphatischen, cycloaliphatischen und insbesondere aromatischen Polyisocyanaten (a1.c) enthalten. Beispielsweise kann es sich hierbei um folgende monomere Diisocyanate handeln: 1,4-Butylendiisocyanat, 1,5-Pentamethylendiisocyanat (PDI), 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat (NDI), 2,2'-und/oder 2,4'- und/oder 4,4'-Diphenylmethandiisocyanat (MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen. Bei der Komponente B1.c) kann es sich auch um modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nichtmodifizierte Polyisocyanate mit mehr als 2 NCO-Gruppen pro Molekül, wie zum Beispiel 4-Isocyanatomethyl-1,8-octandiisocyanat (Nonantriisocyanat) oder Triphenylmethan-4,4',4"-triisocyanat, handeln.

Bevorzugt wird als Komponente (a1.c) TDI zugesetzt, wenn es sich bei den Komponenten (a1.a) und (a1.b) um polymeres MDI handelt.

Statt oder zusätzlich zu der Isocyanatkomponente (a1) können auch geeignete NCO-Präpolymere als organische Isocyanatkomponente (a2) eingesetzt werden. Die Präpolymere sind herstellbar durch Umsetzung einer Isocyanatmischung entsprechend der Isocyanatkomponente (a1) mit einem oder mehreren Polyolen, entsprechend den unter (b1) beschriebenen Polyolen.

Der NCO-Gehalt beträgt bevorzugt von ≥ 29,0 Gew.-% bis ≤ 32,0 Gew.-%, bezogen auf (a1) und weist bevorzugt eine Viskosität bei 25 °C von ≥ 80 mPa·s bis ≤ 2000 mPa·s, besonders bevorzugt von ≥ 100 mPa·s bis ≤ 800 mPa·s auf (dynamische Viskosität bestimmt nach DIN 53019).

Bei den erfindungsgemäß verwendbaren Polyolen (b1) handelt es sich um die dem Fachmann bekannten, in der Polyurethansynthese einsetzbaren Polyole.

Die erfindungsgemäß verwendbaren Polyole weisen bevorzugt ein zahlenmittleres Molekulargewicht Mn von ≥ 80 g/mol bis ≤ 8000 g/mol, bevorzugt von ≥ 90 g/mol bis ≤ 5000 g/mol und besonders bevorzugt von ≥ 92 g/mol bis ≤ 1000 g/mol auf.

Insbesondere handelt es sich um kurzkettige Diole und Polyole und um Polyetherpolyole, Polyesterpolyole, Polyetheresterpolyole, Polycarbonatdiole, Polyether-Polycarbonatdiole und Gemische daraus.

Solche Polyole sind beispielsweise von Ionescu in "Chemistry and Technology of Polyols for Polyurethanes", Rapra Technology Limited, Shawbury 2005, S.55 ff. (Kap. 4: Oligo-Polyols for Elastic Polyurethanes), S. 263 ff. (Kap. 8: Polyester Polyols for Elastic Polyurethanes) und insbesondere auf S.321 ff. (Kap. 13: Polyether Polyols for Rigid Polyurethane Foams) und S.419 ff. (Kap.16: Polyester Polyols for Rigid Polyurethane Foams) beschrieben worden. Geeignete Polyethercarbonatpolyole und ihre Herstellung werden beispielsweise in EP 2910585 A, [0024] - [0041], beschrieben. Beispiele zu Polycarbonatpolyolen und ihrer Herstellung finden sich unter anderem in EP 1359177 A.

Verwendbare Polyetherpolyole sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxide und/oder Epichlorhydrins an di- oder polyfunktionelle Startermoleküle. Insbesondere bevorzugt ist die Addition von Ethylenoxid und Propylenoxid. Geeignete Startermoleküle sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, 1,4-Butandiol, 1,6-Hexandiol sowie niedermolekulare, Hydroxylgruppen aufweisende Ester derartiger Polyole mit Dicarbonsäuren.

Geeignete Polyesterpolyole sind unter anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3- und 1,4-Butandiol, 1,6-Hexandiol und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodecandisäure, Endomethylentetrahydrophthalsäure, Dimerfettsäure, Trimerfettsäure, Zitronensäure, oder Trimellithsäure eingesetzt werden. Als Säurequelle können auch die entsprechenden Anhydride verwendet werden.

Sofern die mittlere Funktionalität des zu veresternden Polyols ≥ 2 ist, können zusätzlich auch Monocarbonsäuren wie Benzoesäure und Hexancarbonsäure mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen, oder durch die Copolymerisation von Alkylenoxiden, wie zum Beispiel Propylenoxid, mit CO₂ erhältlich.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentan-1,3-diol, Dipropylenglykol, Polypropylenglykole, Dibutylenglykol, Polybutylenglykole, Bisphenol A und lactonmodifizierte Diole der vorstehend genannten Art.

Statt oder zusätzlich zu reinen Polycarbonatdiolen können auch Polyether-Polycarbonatdiole eingesetzt werden.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit ≥ 4 bis ≤ 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Als Derivate dieser Säuren können beispielsweise deren Anhydride sowie deren Ester und Halbester mit niedermolekularen, monofunktionellen Alkoholen mit ≥ 1 bis ≤ 4 Kohlenstoffatomen eingesetzt werden.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten.

Startermoleküle sind zum Beispiel Diole mit zahlenmittleren Molekulargewichten Mn von vorzugsweise ≥ 18 g/mol bis ≤ 400 g/mol, bevorzugt von ≥ 62 g/mol bis ≤ 200 g/mol wie 1,2-Ethandiol, 1,3-Propandiol, 1,2-Propandiol, 1,4-Butandiol, 1,5-Pentendiol, 1,5-Pentandiol, Neopentylglykol, 1,6-Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol.

Neben den Diolen können auch Polyole mit zahlenmittleren Funktionalitäten von > 2 bis ≤ 8, oder von ≥ 3 bis ≤ 4 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molekulargewichten von vorzugsweise ≥ 2 g/mol bis ≤ 400 g/mol oder von ≥ 92 g/mol bis ≤ 200 g/mol.

Polyetheresterpolyole können auch durch die Alkoxylierung von Reaktionsprodukten, die durch die Umsetzung von organischen Dicarbonsäuren und Diolen erhalten werden, hergestellt werden. Als Derivate dieser Säuren können beispielsweise deren Anhydride eingesetzt werden, wie zum Beispiel Phthalsäureanhydrid.

Weiterhin können di- oder trifunktionelle Amine und Alkohole, insbesondere Diole und/oder Triole mit Molekulargewichten kleiner als 400 g/mol, vorzugsweise von 80 bis 300 g/mol, zum Einsatz kommen.

Bei den Katalysatoren (b2) können eine oder mehrere Katalysatorverbindungen, insbesondere die für die PUR/PIR - Chemie bekannten katalytisch aktiven Verbindungen eingesetzt werden. Im Allgemeinen sind dies Aminverbindungen. Neben Aminverbindungen können aber auch Salze wie z.B. Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat, Dioctylzinndiacetat, Tris-(*N*,*N*-di-methylamino-propyl)-*s*-hexahydrotriazin, Tetramethyl-ammoniumhydroxid, Natriumacetat, Natriumoctoat, Kaliumacetat, Kaliumoctoat, Natriumhydroxid eingesetzt werden.

Die Katalysatoren (b2) werden im Allgemeinen in einer Menge von 0,001 bis 5 Gew.-%, insbesondere von 0,05 bis 2,5 Gew.-% bezogen auf das Gewicht der Komponente (b), eingesetzt.

Die aus der Polyurethanchemie bekannten Hilfs- und Zusatzstoffe können als Komponenten unter (b3) eingesetzt werden (siehe "Polyurethane Handbook" 2nd edition, edited by Günter Oertel, Carl Hanser Verlag, München 1994, Seiten 98 ff. (Kap. 3.4: Raw Materials - Additives and Auxiliary Materials)).

Bei den weiteren Treibmitteln (b4), die gegebenenfalls vorhanden sein können, handelt es sich insbesondere um physikalische Treibmittel ausgewählt aus der Gruppe aus Kohlenwasserstoffen (z. B. *n*-Pentan, *iso*-Pentan, *cyclo*-Pentan, Butan, Isobutan, Propan), Ethern (z.B. Methylal), halogenierten Ethern, perfluorierten und teilfluorierten Kohlenwasserstoffen mit 1 bis 8 Kohlenstoffatomen, z. B. Perfluorhexan, HFC 245fa (1,1,1,3,3-Pentafluorpropan), HFC 365mfc (1,1,1,3,3-Pentafluorbutan), HFC 134a oder deren Mischungen verwendet, sowie (hydro)fluorierte Olefine, wie z.B. HFO 1233zd(E) (Trans-1-chlor-3,3,3-trifluor-1-propen) oder HFO 1336mzz(Z) (cis-1,1,1,4,4,4-Hexafluor-2-buten) oder Additive, wie FA 188 von 3M (1,1,1,2,3,4,5,5,5-Nonafluor-4-(trifluormethyl)pent-2-en), sowie deren Gemische untereinander.

Zusätzlich zu oder auch statt der oben aufgeführten physikalischen Treibmittel können auch chemische Treibmittel ("Co-Treibmittel") verwendet werden. Bei diesen handelt es sich besonders bevorzugt um Wasser.

Als Treibmittel (c) wird CO₂ im überkritischen oder nahekritischen Zustand verwendet. Im Rahmen der vorliegenden Erfindung liegen nahekritische Bedingungen dann vor, wenn die folgende Bedingung erfüllt ist: (p_{c} - p)/p ≤ 0,4. Hierbei bedeuten p der im Verfahren herrschende Druck und p_{c} der kritische Druck für das Treibmittel oder Treibmittelgemisch. Vorzugsweise liegen nahekritische Bedingungen vor, wenn gilt: (p_{c} - p)/p ≤ 0,3 und besonders bevorzugt (p_{c} - p)/p ≤ 0,2.

Besonders geeignete Bedingungen für die Durchführung des erfindungsgemäßen Verfahrens bei Verwendung von CO₂ sind solche Drücke und Temperaturen oberhalb des kritischen Punktes von CO₂, also ≥ 73,7 bar und ≥ 30,9 °C, bevorzugt zwischen 74 bar und 350 bar sowie zwischen 31 °C und 100 °C, besonders bevorzugt zwischen 75 bar und 200 bar sowie zwischen 32 °C und 60 °C.

Es kann auch eine Mischung aus überkritischem CO₂ und anderen physikalischen Treibmitteln, insbesondere ausgewählt aus den oben als bevorzugt genannten Treibmitteln eingesetzt werden. Werden weitere Treibmittel zugesetzt, enthält die Treibmittelmischung aus (b4) und (c) in einer Ausführungsform bevorzugt mehr als 60 Gew.-% Kohlenstoffdioxid, besonders bevorzugt mehr als 75 Gew.-%.

Der Anteil des Treibmittels (c) in der Polyolkomponente (b) beträgt ≥ 1 Gew.-% bis ≤ 30 Gew.-%, bevorzugt ≥ 10 Gew.-% bis ≤ 20 Gew.-%. Der Anteil des Treibmittels in dem schaumbildenden Reaktionsgemisch (R) beträgt 0,5 Gew.-% bis 15 Gew.-%, bevorzugt 5 Gew.-% bis 10 Gew.-%.

Die Erfindung soll anhand der nachfolgenden Beispiele näher erläutert werden.

### Beispiele

### Eingesetzte Ausgangsmaterialien:

| | |
|---|---|
| Polyol 1: | Ethylenoxid-basiertes Polyol (Funktionalität (F) = 3, Hydroxylzahl (OHZ) = 550 mg KOH/g); Starter: 1,1,1-Trimethylolpropan |
| Kurzkettiges Polyol 2: | Propylenoxid-basiertes Polyol (F= 3, OHZ = 1030 mg KOH/g); |
| Starter: | 1,1,1-Trimethylolpropan |
| Katalysator 1: | Dabco T120 (von der Fa. Evonik) |
| Katalysator 2: | Dabco NE1070 (von der Fa. Evonik) |
| Flammschutzmittel: | Tris(2-chlorisopropyl)phosphat (TCPP) |
| Treibmittel: | CO₂ |
| Isocyanat: | Polymeres MDI; NCO-Gehalt =31,4 Gew.-%; f = 2,9; Monomer-Gehalt = 40 Gew.-% (Desmodur 44V20 L von Covestro Deutschland AG) |

### Versuchsdurchführung:

### Herstellung eines Polyurethanschaumes, Vergleichsbeispiel 2:

Zur Herstellung des Polyurethanschaums wurden 200g einer Zusammensetzung aus der Polyolformulierung aus den in der nachfolgenden Tabelle 1 aufgeführten Polyolen, Stabilisatoren und Katalysatoren sowie dem Treibmittel hergestellt. Zur Herstellung des Reaktionsgemisches wurde diese Zusammensetzung aus Polyolformulierung und Treibmittel mit der entsprechenden Menge Isocyanat via Pendraulikrührer für 10 Sekunden bei 23 °C vermischt und in eine nach oben hin geöffnete Form (20 cm x 20 cm x 18 cm) ausgegossen. Die genaue Rezeptur und die Ergebnisse der Eigenschaften des Reaktionsgemisches sowie der physikalischen Untersuchungen des Schaums sind in Tabelle 1 zusammengefasst.

### Herstellung eines Polyurethanschaumes, Beispiel 1:

Die Zugabe von überkritischem CO₂ (c) zur Polyolkomponente (b) erfolgte über ein Impfventil und einen darauf folgenden statischen Mischer vor dem Mischkopf. Danach erfolgte die Zugabe des Isocyanats (a) im Mischkopf. Die Mischung wurde in einen mit N₂ und einer schwimmenden Dichtung vorgespannten Reaktionsraum injiziert. Nach Viskositätsaufbau wurde durch Druckentlastung des N₂ die Polyurethanreaktionsmischung expandiert und nach 20 Minuten der Schaum entformt. Die genaue Rezeptur und die Ergebnisse der Eigenschaften des Reaktionsgemisches sowie der physikalischen Untersuchungen des Schaums sind in Tabelle 1 zusammengefasst.

### Verwendete Normen und Messgeräte:

Bestimmung der Rohdichte: Schaumstoffe aus Kautschuk und Kunststoffen - Bestimmung der Rohdichte (ISO 845:2006); Deutsche Fassung EN ISO 845:2009

Bestimmung der OH-Zahl: Die Bestimmung der Hydroxylzahl - Teil 2: Verfahren mit Katalysator gemäß DIN 53240-2, Stand November 2007

Bestimmung der Zellgröße: Lichtmikroskopische Auswertung via Lichtmikroskop VHX-600 (Fa. Keyence, Neu Isenburg, Deutschland); Der zu vermessende Probekörper wird an 3 unterschiedlichen Stellen jeweils über einen kreisförmigen Bereich mit einem Durchmesser von 5 mm untersucht. Hierbei wird die Auflösung so gewählt, dass der ausgewählte Bereich rund 100 Zellen erfasst. Danach werden mind. 100 Zellen vermessen, der kleinste Zelldurchmesser, der D90-Wert, der durchschnittliche Zelldurchmesser sowie die prozentuale Standardabweichung berechnet.

**Tabelle 1:**

| | Beispiel 1 | Vergleich 2 |
|---|---|---|
| Polyol 1 [Gew.-Teile] | 74,54 | 74,54 |
| Polyol 2 [Gew.-Teile] | 13,21 | 13,21 |
| Dabco NE1070 [Gew.-Teile] | 0,70 | 0,70 |
| Dabco T120 [Gew.-Teile] | 0,05 | 0,05 |
| TCPP [Gew.-Teile] | 11,51 | 11,51 |
| | | |
| Tensid [Gew.-Teile] | ---- | ---- |
| | | |
| Überkritisches CO2 [Gew.-Teile] | 16,0 | ---- |
| Treibmittel Wasser [Gew.-Teile] | ---- | 1,364 |
| | | |
| Desmodur 44V20L [Gew.-Teile] | 131,39 | 131,39 |
| | | |
| Dichte [kg/m³] | 85 | 81 |
| kleinste Zelle [µm] | 18,2 | 108,0 |
| D90 [µm] | 46,0 | 448,0 |
| arithmetisches Mittel [µm] | 35,6 | 298,7 |
| Standardabw. [%] | 23 | 32 |

Es konnte gezeigt werden, dass ohne Einsatz von Tensiden durch die Verwendung von gelöstem, überkritischem CO₂ als Treibmittel sowie dem Einsatz des oben beschriebenen Verfahrens Schäume mit stark verminderten Zelldimensionen erhalten werden. Verminderte Zelldimensionen wirken sich bekanntermaßen positiv auf die Wärmedämmeigenschaften aus.

## Patentansprüche

1. Verfahren zur Herstellung von fein- und geschlossenzelligem Polyurethan/- Polyisocyanurathartschaum (PUR/PIR-Hartschaum) mit einer Offenzelligkeit von <10% gemäß DIN EN ISO 4590-2003 und einer mittleren Zellgröße von < 30 µm (ermittelt durch Zellgrößenauswertung am Lichtmikroskop), umfassend die Schritte:
i) Vermischen von einer mit Isocyanaten reaktiven Polyolformulierung mit überkritischem CO₂,
ii) Vermischen der mit CO₂ vermischten Polyolformulierung mit einem organischen Polyisocyanat in einem Hochdruckmischkopf,
iii) Einbringen der in ii) genannten Mischung in eine geschlossene Form, wobei die geschlossene Form so eingerichtet ist, dass deren inneres Volumen und/oder der in ihrem Inneren herrschende Druck nach dem Einbringen der Mischung durch externe Beeinflussung verändert werden,
iv) Verweilen der in ii) genannten Mischung in der geschlossenen Form für eine vorbestimmte Zeitdauer von ≥ 0 Sekunden,
v) Vergrößern des inneren Volumens der geschlossenen Form und/oder Verringern des im Inneren der geschlossenen Form herrschenden Drucks durch externe Beeinflussung, und
vi) Entformen des PUR/PIR-Hartschaums,
wobei als Polyurethanreaktivmischung eine Mischung bestehend aus
a) mindestens einem organischen Polyisocyanat,
b) einer Polyolkomponente bestehend aus
b1) einem oder mehreren Polyolen wobei mindestens eine Polyolkomponente eine Funktionalität f von > 2,5 aufweist, welche ausgewählt ist aus der Gruppe bestehend aus Polyetherpolyolen, Polyesterpolyolen, Polycarbonatpolyolen, Polyether-Polycarbonatpolyolen und Polyetheresterpolyolen,
b2) einer Katalysatorkomponente,
b3) gegebenenfalls Hilfs- und Zusatzmitteln,
b4) gegebenenfalls Treibmitteln ausgenommen CO₂, ausgewählt aus der Gruppe umfassend lineare, verzweigte oder cyclische Cl- bis C6-Alkane, lineare, verzweigte oder cyclische Cl- bis C6-Fluoralkane, N₂, O₂ und/oder Argon und
c) überkritischem CO₂ als Treibmittel,
die kein mikroemulsionsstabilisierendes Tensid enthält, eingesetzt wird.

2. Fein- und geschlossenzelliger Polyurethan/Polyisocyanurathartschaum mit einer Offenzelligkeit von < 10% gemäß DIN EN ISO 4590-2003 und einer mittleren Zellgröße von < 30 µm (ermittelt durch Zellgrößenauswertung am Lichtmikroskop), der erhältlich ist aus einer Polyurethanreaktionsmischung bestehend aus
a) mindestens einem organischen Polyisocyanat,
b) einer Polyolkomponente bestehend aus
b1) einem oder mehreren Polyolen, wobei mindestens eine Polyolkomponente eine Funktionalität f von > 2,5 aufweist, welche ausgewählt ist aus der Gruppe bestehend aus Polyetherpolyolen, Polyesterpolyolen, Polycarbonatpolyolen, Polyether-Polycarbonatpolyolen und Polyetheresterpolyolen,
b2) einer Katalysatorkomponente,
b3) gegebenenfalls Hilfs- und Zusatzmitteln, beispielsweise Stabilisatoren und Flammschutzmittel,
b4) gegebenenfalls Treibmitteln ausgenommen CO₂, ausgewählt aus der Gruppe umfassend lineare, verzweigte oder cyclische Cl- bis C6-Alkane, lineare, verzweigte oder cyclische Cl- bis C6-Fluoralkane, N₂, O₂ und/oder Argon und
c) überkritischem CO₂ als Treibmittel,
die kein mikroemulsionsstabilisierendes Tensid enthält.

3. Verwendung des Fein- und geschlossenzelligen Polyurethan/Polyisocyanurathartschaums gemäß Anspruch 2 als Isolationsmaterial.
